# EUROPEAN PATENT APPLICATION

(11) **EP 4 368 457 A1**
(43) Date of publication of application: **15.05.2024**
(21) Application number: 21950557.5
(22) Date of filing: 23.07.2021
(51) Int. Cl.: B60R 16/023

(54) **FAULT INFORMATION TRANSMISSION METHOD AND APPARATUS, AND STORAGE MEDIUM**

(71) Applicant: Huawei Technologies Co., Ltd., Longgang Shenzhen, Guangdong 518129 (CN)
(72) Inventor: CHEN, Qingyu, Shenzhen, Guangdong 518129 (CN); BAO, Pengxin, Shenzhen, Guangdong 518129 (CN); WEN, Haibo, Shenzhen, Guangdong 518129 (CN)
(74) Representative: Maiwald GmbH
(86) International application number: PCT/CN2021/108168
(87) International publication number: WO 2023/000308

(57) **Abstract**

This application relates to the field of communication technologies, and in particular, to a fault information transmission method and apparatus, and a storage medium, and is applied to autonomous driving or intelligent driving. The method is applied to a system including a first device and a second device, and includes: When a fault occurs in a first transmission unit of the first device, the first device sends fault information to the second device, where the fault information indicates a fault cause of the first transmission unit; a second transmission unit of the second device receives the fault information, stores the fault information in a storage space, and sends a notification signal to a processing unit of the second device; the processing unit receives the notification signal, and reads the fault information in the storage space. In embodiments of this application, the second device may obtain the fault information by reading the local storage space. This improves fault determining efficiency of the second device. Further, the method may be applied to an internet of vehicles, for example, vehicle-to-everything V2X, long term evolution-vehicle LTE-V, or vehicle-to-vehicle V2V.

## Description

### TECHNICAL FIELD

This application relates to the field of communication technologies, and in particular, to a fault information transmission method and apparatus, and a storage medium.

### BACKGROUND

In a transmission system including an A-end device and a B-end device, if a fault occurs in the A-end device, a processing unit of the B-end device needs to be notified. After receiving the notification information, the processing unit needs to determine a fault cause of the other device, and then perform corresponding processing.

When the fault occurs in a transmission unit of the A-end device, a fault cause is recorded through a register in the transmission unit, and the B-end device determines the fault by reading the fault cause recorded in the register of the A-end device. However, fault determining efficiency of the B-end device is reduced by limitation of a transmission mechanism between the A-end device and the B-end device.

### SUMMARY

In view of this, a fault information transmission method and apparatus, and a storage medium are provided, to improve fault determining efficiency of a second device.

According to a first aspect, an embodiment of this application provides a fault information transmission method, applied to a transmission system including a first device and a second device, where the method includes:

When a fault occurs in a first transmission unit of the first device, the first device sends fault information to the second device, where the fault information indicates a first fault cause of the fault in the first transmission unit.

A second transmission unit of the second device receives the fault information, stores the fault information in a storage space of the second transmission unit, and sends a notification signal to a processing unit of the second device.

The processing unit receives the notification signal, and reads the fault information in the storage space of the second transmission unit.

In this implementation, the first device sends, to the second device, the fault information indicating the first fault cause of the fault in the first transmission unit. After receiving the fault information, the second transmission unit of the second device stores the fault information in the local storage space, and sends the notification signal to the processing unit of the second device. The processing unit may directly obtain the fault information by reading the local storage space. This avoids low fault determining efficiency due to limitation of a transmission mechanism between devices at two ends of a transmission system in the conventional technology, greatly shortens duration in which the processing unit obtains the current first fault cause of the first transmission unit, and improves fault determining efficiency of the second device.

In a possible implementation, the fault information includes a first index value, and the method further includes:

The first device determines, based on a preset correspondence, the first index value corresponding to the first fault cause, where the preset correspondence includes a one-to-one correspondence between a fault cause and an index value.

After that the processing unit receives the notification signal, and reads the fault information in the storage space of the second transmission unit, the method further includes:
determining, by the processing unit based on the preset correspondence, the first fault cause corresponding to the first index value.

In this implementation, the first device sends the first index value corresponding to the first fault cause to the second device, so that the second transmission unit of the second device stores the received first index value in the local storage space, and sends the notification signal to the processing unit. In this way, after reading the first index value in the storage space of the second transmission unit, the processing unit directly determines, based on the preset correspondence, the first fault cause corresponding to the first index value. This further ensures efficiency of obtaining, by the processing unit, the current first fault cause of the first transmission unit.

In another possible implementation, the fault cause includes at least one of a single-bit fault in a memory, a multi-bit fault in the memory, and an internal bus transmission fault.

In this implementation, the possible fault cause when the fault occurs in the first transmission unit is defined, and the fault cause includes at least one of the single-bit fault in the memory, the multi-bit fault in the memory, and the internal bus transmission fault. In this way, if the fault occurs in the first transmission unit of the first device subsequently, the fault information transmission method provided in this embodiment of this application may be used. This ensures applicability of the fault information transmission method.

In another possible implementation, before the sending a notification signal to a processing unit of the second device, the method further includes:
generating, by the second transmission unit, the notification signal based on the first index value.

In this implementation, when the fault occurs in the first transmission unit of the first device, the first device sends only the first index value to the second device, where the first index value indicates the first fault cause of the fault in first transmission unit, so that after receiving the first index value, the second transmission unit of the second device stores the first index value in the storage space of the second transmission unit, and sends the notification signal to the processing unit. This further reduces data transmission overheads between the first device and the second device while improving efficiency of obtaining the fault cause.

In another possible implementation, the method further includes:

The first device sends an interrupt signal to the second device, where the interrupt signal indicates that the fault occurs in the first transmission unit of the first device.

Before that the second transmission unit sends a notification signal to a processing unit of the second device, the method further includes:

The second transmission unit generates the notification signal based on the interrupt signal and the first index value.

In this implementation, when the fault occurs in the first transmission unit of the first device, the first device sends the interrupt signal and the first index value to the second device, where the interrupt signal indicates that the fault occurs in the first transmission unit of the first device, and the first index value indicates the first fault cause of the fault in the first transmission unit, so that the second transmission unit of the second device stores the received first index value in the storage space of the second transmission unit, and the second device triggers, based on the received interrupt signal and the first index value, to perform the step of generating and sending the notification signal. This further ensures reliability of notification signal transmission.

In another possible implementation, a priority of the first fault cause is greater than a preset priority threshold.

In this implementation, when the fault occurs in the first transmission unit of the first device and the priority of the fault cause is greater than the preset priority threshold, the first device sends the fault information to the second device, that is, the priority of the first fault cause indicated by the fault information is greater than the preset priority threshold, so that the processing unit of the second device can process a high-priority fault in a more timely manner.

In another possible implementation, the first device is a camera, the second device is a mobile data center, the first transmission unit is a serializer, the second transmission unit is a deserializer, the storage space is a register, and the processing unit is a processing chip.

In this implementation, a possible application scenario is provided for the fault information transmission method provided in this embodiment of this application. In this application scenario, the first device is the camera, the second device is the mobile data center, the first transmission unit is the serializer, the second transmission unit is the deserializer, and the storage space is the register. The processing unit is a processing chip. This ensures applicability of the fault information transmission method.

In another possible implementation, the first device is a display, the second device is a cockpit controller, the first transmission unit is a deserializer, the second transmission unit is a serializer, the storage space is a register, and the processing unit is a processing chip.

In this implementation, another possible application scenario is provided for the fault information transmission method provided in this embodiment of this application. In this application scenario, the first device is the display, the second device is the cockpit controller, the first transmission unit is the deserializer, the second transmission unit is the serializer, the storage space is the register, and the processing unit is a processing chip, so that applicability of the fault information transmission method is ensured.

According to a second aspect, an embodiment of this application provides a fault information transmission method, applied to a first device, where the method includes:
when a fault occurs in a first transmission unit of the first device, sending fault information to a second device, where the fault information indicates a first fault cause of the fault in the first transmission unit.

In a possible implementation, the fault information includes a first index value, and the method further includes:
determining, based on a preset correspondence, the first index value corresponding to the first fault cause, where the preset correspondence includes a one-to-one correspondence between a fault cause and an index value.

In another possible implementation, the fault cause includes at least one of a single-bit fault in a memory, a multi-bit fault in the memory, and an internal bus transmission fault.

In another possible implementation, the method further includes:
sending an interrupt signal to the second device, where the interrupt signal indicates that the fault occurs in the first transmission unit of the first device.

In another possible implementation, a priority of the first fault cause is greater than a preset priority threshold.

In another possible implementation, the first device is a camera, the first transmission unit is a serializer, and the second device is a mobile data center.

In another possible implementation, the first device is a display, the first transmission unit is a deserializer, and the second device is a cockpit controller.

According to a third aspect, an embodiment of this application provides a fault information transmission method, applied to a second device, where the method includes:

A second transmission unit of the second device receives fault information sent by a first device, where the fault information indicates a first fault cause of a fault in a first transmission unit of the first device.

The second transmission unit stores the fault information in a storage space of the second transmission unit, and sends a notification signal to a processing unit of the second device.

The processing unit receives the notification signal, and reads the fault information in the storage space of the second transmission unit.

In a possible implementation, the method further includes:

The processing unit determines, based on a preset correspondence, the first fault cause corresponding to the first index value, where the preset correspondence includes a one-to-one correspondence between a fault cause and an index value.

In another possible implementation, the fault cause includes at least one of a single-bit fault in a memory, a multi-bit fault in the memory, and an internal bus transmission fault.

In another possible implementation, before the sending a notification signal to a processing unit of the second device, the method further includes:

The second transmission unit generates the notification signal based on the first index value.

In another possible implementation, before the sending a notification signal to a processing unit of the second device, the method further includes:

The second transmission unit generates the notification signal based on an interrupt signal and the first index value, where the interrupt signal indicates that the fault occurs in the first transmission unit of the first device.

In another possible implementation, a priority of the first fault cause is greater than a preset priority threshold.

In another possible implementation, the first device is a camera, the second device is a mobile data center, the first transmission unit is a serializer, the second transmission unit is a deserializer, the storage space is a register, and the processing unit is a processing chip.

In another possible implementation, the first device is a display, the second device is a cockpit controller, the first transmission unit is a deserializer, the second transmission unit is a serializer, the storage space is a register, and the processing unit is a processing chip.

According to a fourth aspect, an embodiment of this application provides a fault information transmission apparatus, used in a first device, and the apparatus includes:
a first transmission unit, configured to: when a fault occurs in a first transmission unit of the first device, send fault information to a second device, where the fault information indicates a first fault cause of the fault in the first transmission unit.

In a possible implementation, the fault information includes a first index value, and the first transmission unit is further configured to:
determine, based on a preset correspondence, the first index value corresponding to the first fault cause, where the preset correspondence includes a one-to-one correspondence between a fault cause and an index value.

In another possible implementation, the fault cause includes at least one of a single-bit fault in a memory, a multi-bit fault in the memory, and an internal bus transmission fault.

In another possible implementation, the first transmission unit is further configured to:
send an interrupt signal to the second device, where the interrupt signal indicates that the fault occurs in the first transmission unit of the first device.

In another possible implementation, a priority of the first fault cause is greater than a preset priority threshold.

In another possible implementation, the first device is a camera, the first transmission unit is a serializer, and the second device is a mobile data center.

In another possible implementation, the first device is a display, the first transmission unit is a deserializer, and the second device is a cockpit controller.

According to a fifth aspect, an embodiment of this application provides a fault information transmission apparatus, used in a second device, and the apparatus includes:
a second transmission unit, configured to receive fault information sent by a first device, where the fault information indicates a first fault cause of a fault in a first transmission unit of the first device, where
the second transmission unit is further configured to: store the fault information in a storage space of the second transmission unit, and send a notification signal to a processing unit of the second device; and
the processing unit is configured to: receive the notification signal, and read the fault information in the storage space of the second transmission unit.

In a possible implementation, the fault information includes a first index value.

The processing unit is further configured to determine, based on a preset correspondence, the first fault cause corresponding to the first index value, where the preset correspondence includes a one-to-one correspondence between a fault cause and an index value.

In another possible implementation, the fault cause includes at least one of a single-bit fault in a memory, a multi-bit fault in the memory, and an internal bus transmission fault.

In another possible implementation,
the second transmission unit is further configured to generate the notification signal based on the first index value.

In another possible implementation,
the second transmission unit is further configured to generate the notification signal based on an interrupt signal and the first index value, where the interrupt signal indicates that the fault occurs in the first transmission unit of the first device.

In another possible implementation, a priority of the first fault cause is greater than a preset priority threshold.

In another possible implementation, the first device is a display, the second device is a cockpit controller, the first transmission unit is a deserializer, the second transmission unit is a serializer, the storage space is a register, and the processing unit is a processing chip.

According to a sixth aspect, an embodiment of this application provides a transmission system, where the transmission system includes a first device and a second device.

The first device is configured to: when a fault occurs in a first transmission unit of the first device, send fault information to the second device, where the fault information indicates a first fault cause of the fault in the first transmission unit.

The second device is configured to: receive the fault information by using a second transmission unit, store the fault information in a storage space of the second transmission unit, and send a notification signal to a processing unit of the second device.

The second device is further configured to: receive the notification signal by using the processing unit, and read the fault information in the storage space of the second transmission unit.

In a possible implementation, the fault information includes a first index value.

The first device is further configured to determine, based on a preset correspondence, the first index value corresponding to the first fault cause, where the preset correspondence includes a one-to-one correspondence between a fault cause and an index value.

The second device is further configured to determine, based on the preset correspondence by using the processing unit, the first fault cause corresponding to the first index value.

In another possible implementation, the fault cause includes at least one of a single-bit fault in a memory, a multi-bit fault in the memory, and an internal bus transmission fault.

In another possible implementation, the second device is further configured to generate the notification signal based on the first index value by using the second transmission unit.

In another possible implementation,
the first device is further configured to send an interrupt signal to the second device, where the interrupt signal indicates that the fault occurs in the first transmission unit of the first device.

Before the second device is further configured to send a notification signal to a processing unit of the second device by using the second transmission unit, the method further includes:

The second device is further configured to generate the notification signal based on the interrupt signal and the first index value by using the second transmission unit.

In another possible implementation, a priority of the first fault cause is greater than a preset priority threshold.

In another possible implementation, the first device is a camera, the second device is a mobile data center, the first transmission unit is a serializer, the second transmission unit is a deserializer, the storage space is a register, and the processing unit is a processing chip.

In another possible implementation, the first device is a display, the second device is a cockpit controller, the first transmission unit is a deserializer, the second transmission unit is a serializer, the storage space is a register, and the processing unit is a processing chip.

According to a seventh aspect, an embodiment of this application provides a non-volatile computer-readable storage medium, where the non-volatile computer-readable storage medium stores computer program instructions, and when the computer program instructions are executed by a processor, the fault information transmission method provided in any one of the second aspect or the possible implementations of the second aspect is implemented.

According to an eighth aspect, an embodiment of this application provides a non-volatile computer-readable storage medium, where the non-volatile computer-readable storage medium stores computer program instructions, and when the computer program instructions are executed by a processor, the fault information transmission method provided in any one of the third aspect or the possible implementations of the third aspect is implemented.

According to a ninth aspect, an embodiment of this application provides a computer program product, where the computer program product includes computer-readable code, and when the computer-readable code runs in an electronic device, a processor in the electronic device performs the fault information transmission method provided in any one of the second aspect or the possible implementations of the second aspect.

According to a tenth aspect, an embodiment of this application provides a computer program product, where the computer program product includes computer-readable code, and when the computer-readable code runs in an electronic device, a processor in the electronic device performs the fault information transmission method provided in any one of the third aspect or the possible implementations of the third aspect.

### BRIEF DESCRIPTION OF DRAWINGS

FIG. 1 is a schematic diagram of an in-vehicle image transmission system according to the conventional technology;
FIG. 2 is a schematic diagram of a structure of a transmission system according to an example embodiment of this application;
FIG. 3 is a schematic diagram of a structure of a transmission system according to another example embodiment of this application;
FIG. 4 is a schematic diagram of a structure of a transmission system according to another example embodiment of this application;
FIG. 5 is a flowchart of a fault information transmission method according to an example embodiment of this application; and
FIG. 6 is a flowchart of a fault information transmission method according to another example embodiment of this application.

### DESCRIPTION OF EMBODIMENTS

The following describes various example embodiments, features, and aspects of this application in detail with reference to accompanying drawings. Identical reference numerals in the accompanying drawings indicate elements that have same or similar functions. Although various aspects of embodiments are illustrated in the accompanying drawing, the accompanying drawings are not necessarily drawn in proportion unless otherwise specified.

In embodiments of this application, "/" may indicate an "or" relationship between associated objects. For example, A/B may indicate A or B. "And/or" may be used to describe three relationships between associated objects. For example, A and/or B may indicate the following three cases: Only A exists, both A and B exist, and only B exists, where A and B may be singular or plural. To facilitate description of the technical solutions in embodiments of this application, in embodiments of this application, terms such as "first" and "second" may be used to distinguish between technical features having same or similar functions. The terms such as "first" and "second" do not limit a quantity and an execution sequence, and the terms such as "first" and "second" do not indicate a definite difference. In embodiments of this application, a term like "example" or "for example" indicates an example, an illustration, or a description. Any embodiment or design scheme described as an "example" or "for example" should not be explained as being more preferred or having more advantages than another embodiment or design scheme. Use of the term like "example" or "for example" is intended to present a relative concept in a specific manner for ease of understanding.

In embodiments of this application, "first", "second", "third", "A", "B", "C", "D", and the like are used for distinguishing between technical features described by them. There is no chronological order or no size order between the technical features described by "first", "second", "third", "A", "B", "C", and "D".

In addition, numerous specific details are given in the following specific implementations to better describe this application. A person skilled in the art should understand that this application can also be implemented without some specific details. In some embodiments, methods, means, elements, and circuits that are well-known to a person skilled in the art are not described in detail, so that a main purpose of this application is highlighted.

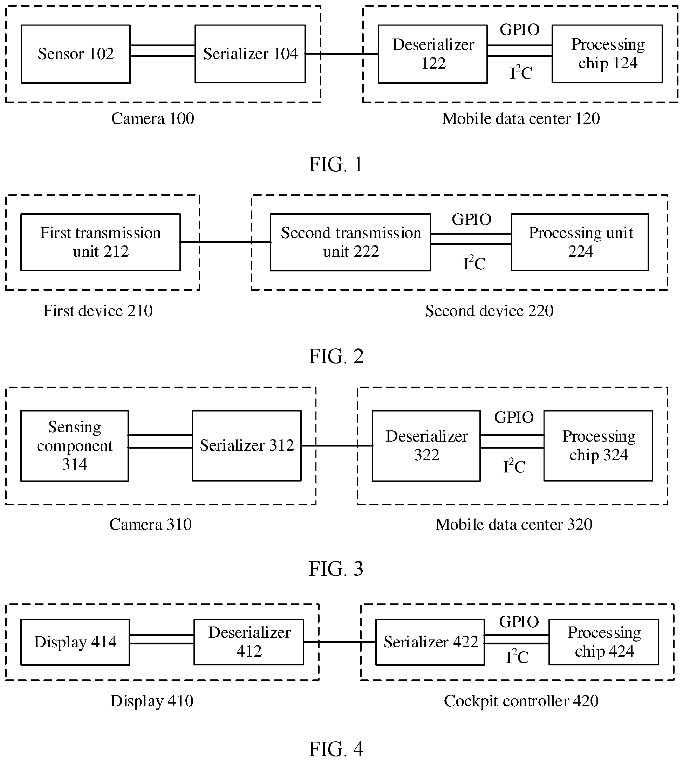

In the conventional technology, for example, a transmission system is an in-vehicle image transmission system, an A-end device is a camera, and a B-end device is a computing platform. In an example, the computing platform may be a mobile data center (mobile data center, MDC), as shown in FIG. 1. The camera 100 is configured to collect an image in a driving process. The mobile data center 120 is configured to process data collected by the camera, for example, perform image processing, and analyze an environment surrounding a vehicle. The camera 100 includes a sensor 102 and a serializer 104 connected to the sensor 102. The mobile data center 120 includes a deserializer 122 and a processing chip 124 connected to the deserializer 122. The serializer 104 of the camera 100 and the deserializer 122 of the mobile data center 120 perform inter-device data transmission. In a working process, a plurality of faults may occur in the serializer 104 of the camera 100. When a fault occurs in the serializer 104 of the camera 100, the camera 100 sends an interrupt signal to the deserializer 122 of the mobile data center 120 by using the serializer 104. After receiving the interrupt signal, the deserializer 122 generates a pulse signal on a general-purpose input/output (General-purpose input/output, GPIO) interface. The pulse signal is used to notify the processing chip 124 of the fault. After receiving the pulse signal, the processing chip 124 initiates diagnosis, and reads a register in the serializer 104 of the camera 100 on an inter-integrated circuit (Inter-Integrated Circuit, I²C) interface by using the deserializer 122, to obtain a fault cause.

However, in the method, because a working mechanism of the I²C interface is that 1-bit feedback information needs to be returned every time 8-bit (bit) data is transmitted, data transmission efficiency between the deserializer 122 and the serializer 104 is very low. As a result, the processing chip 124 reads the register in the serializer 104 at a very low speed, it takes a long time to obtain the fault cause, and fault determining efficiency of the mobile data center 120 is low.

Therefore, embodiments of this application provide a fault information transmission method and apparatus, and a storage medium. A first device sends, to a second device, fault information indicating a first fault cause of a fault in a first transmission unit. After receiving the fault information, a second transmission unit of the second device stores the fault information in a local storage space, and sends a notification signal to a processing unit of the second device. The processing unit may directly obtain the fault information by reading the local storage space. This avoids low fault determining efficiency due to limitation of a transmission mechanism between devices at two ends of a transmission system in the conventional technology, greatly shortens duration in which the processing unit obtains the current first fault cause of the first transmission unit, and improves fault determining efficiency of the second device.

First, an application scenario in this application is described. The fault information transmission method provided in embodiments of this application is applied to a transmission system that includes the first device and the second device. The transmission system may be a vehicle. The fault information transmission method may be applied to the field of autonomous driving or intelligent driving. Further, the fault information transmission method may be applied to an internet of vehicles, for example, vehicle-to-everything (Vehicle-To-Everything, V2X), long term evolution-vehicle (Long Term Evolution-Vehicle, LTE-V), and vehicle-to-vehicle (Vehicle-To-Vehicle, V2V). FIG. 2 is a schematic diagram of a transmission system according to an example embodiment of this application. The transmission system includes a first device 210 and a second device 220. Data is transmitted between the first device 210 and the second device 220 by using respective transmission units.

The first device 210 includes a first transmission unit 212. Optionally, the first device 210 further includes another unit connected to the first transmission unit 212. For example, the another unit includes a display unit or a sensing unit. This is not limited in embodiments of this application.

The second device 220 includes a second transmission unit 222 and a processing unit 224 connected to the second transmission unit 222. The second transmission unit 222 includes a plurality of storage spaces. For example, the storage spaces are registers.

Optionally, the second transmission unit 222 is configured to send a signal to the processing unit 224 by using a first interface connected to the processing unit 224, and the processing unit 224 is configured to receive, by using the first interface, the signal sent by the second transmission unit 222. The processing unit 224 is further configured to read data in the second transmission unit 222 by using a second interface connected to the second transmission unit 222. For example, the first interface is a GPIO interface, and the second interface is an I²C interface.

In an embodiment of this application, the first device 210 is configured to send fault information to the second device 220 when a fault occurs in the first transmission unit 212, where the fault information indicates a first fault cause of the fault in the first transmission unit 212. The second transmission unit 222 of the second device 220 is configured to receive the fault information, store the fault information in a storage space of the second transmission unit 222, and send a notification signal to the processing unit 224 of the second device 220. The processing unit 224 is configured to: receive the notification signal, and read the fault information in the storage space of the second transmission unit 222.

For ease of description, an example in which the transmission system is an in-vehicle transmission system is used below for description. A type of the transmission system is not limited in embodiments of this application.

In a possible implementation, as shown in FIG. 3, the first device is a camera 310, and the second device is a computing platform, for example, the computing platform is a mobile data center 320. A first transmission unit of the first device is a serializer 312, and another unit connected to the first transmission unit is a sensing component 314. A second transmission unit of the second device is a deserializer 322, and a processing unit connected to the second transmission unit is a processing chip 324.

Optionally, the sensing component 314 is configured to send a signal to the serializer 312 by using a third interface connected to the serializer 312, and the serializer 312 is configured to receive, by using the third interface, the signal sent by the sensing component 314. The serializer 312 is further configured to read data in the sensing component 314 by using a fourth interface connected to the sensing component 314. For example, the third interface is a GPIO interface, and the fourth interface is an I²C interface.

The sensing component 314 is configured to sense an external environment, and convert a sensed signal into an electrical signal. The sensing component 314 may be a millimeter wave radar or a lidar or another sensor.

The serializer 312 and the deserializer 322 are interface circuits in high-speed data communication. The serializer 312 communicates with the deserializer 322 by using a point-to-point serial communication technology. The serializer 312 is configured to convert a plurality of low-speed parallel signals into a high-speed serial signal and send the high-speed serial signal to the deserializer 322. The deserializer 322 is configured to re-convert the received high-speed serial signal into a low-speed parallel signal.

The serializer 312 and the deserializer 322 are connected in a wired manner, and a transmission protocol used by the serializer 312 and the deserializer 322 may be a gigabit multimedia serial link (GMSL) or a flat-panel display link (Flat-panel display Link, FPD-LINK), or a domestic vehicle-mounted cable high-speed media transmission technology and test method. This is not limited in embodiments of this application.

Herein, the processing chip 324 may include one or more processing units. For example, the processing chip 324 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (Neural-network Processing Unit, NPU), and/or the like. Different processing units may be independent components, or may be integrated into one or more processors. This is not limited in embodiments of this application.

Optionally, when the camera 310 is in an operation mode, for example, a shooting mode or a video mode, the camera 310 is configured to receive external multimedia data. The camera 310 may be a fixed optical lens system or a device having a focal length and an optical zoom capability.

Optionally, the mobile data center 320 is an intelligent in-vehicle computing platform of a vehicle. The mobile data center is a functional unit that is in an intelligent/autonomous driving vehicle and that is responsible for processing data collected by sensors in an advanced driver assistant system and making a driving decision. The mobile data center may also be referred to as a mobile computing center.

The mobile data center 320 may be implemented as a terminal installed on the vehicle to assist the vehicle in traveling, or a chip in the terminal. The mobile data center 320 may be user equipment (user equipment, UE), an access terminal, a terminal unit, a terminal station, a mobile station, a remote station, a remote terminal, a mobile device, a wireless communication device, a terminal agent, a terminal apparatus, or the like in a 5G network or a future evolved public land mobile network (Public Land Mobile Network, PLMN). The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. The mobile data center 320 may be mobile or fixed.

In an embodiment of this application, the camera 310 is configured to: when a fault occurs in the serializer 312, send fault information to the mobile data center 320, where the fault information indicates a first fault cause of the fault in the serializer 312. The deserializer 322 of the mobile data center 320 is configured to receive the fault information, store the fault information in a storage space of the deserializer 322, and send a notification signal to the processing chip 324 of the mobile data center 320. The processing chip 324 is configured to receive a notification signal and read the fault information in the register of the deserializer 322.

In another possible implementation, as shown in FIG. 4, a first device is a display 410, and a second device is a cockpit controller 420. A first transmission unit of the first device is a deserializer 412, and another unit connected to the first transmission unit is a display 414. A second transmission unit of the second device is a serializer 422, and a processing unit connected to the second transmission unit is a processing chip 424.

Optionally, the display 410 is configured to display an image, a video, or the like. The display 410 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like.

Optionally, the cockpit controller 420 is configured to control an interior seat and the display 410 of the vehicle. For example, the cockpit controller 420 is separately connected to a vehicle-mounted device and the display 410 by using a high-speed communication bus. The cockpit controller 420 is configured to receive data sent by the vehicle-mounted device, process the data, and send the processed data to the display 410 for display.

In an embodiment of this application, the display 410 is configured to: when a fault occurs in the deserializer 412, send fault information to the cockpit controller 420, where the fault information indicates a first fault cause of the fault in the deserializer 412. A serializer 422 of the cockpit controller 420 is configured to receive the fault information, store the fault information in a storage space of the serializer 422, and send a notification signal to the processing chip 424 of the cockpit controller 420. The processing chip 424 is configured to: receive the notification signal and read the fault information in a register of the serializer 422.

It should be noted that an application scenario related to the fault information transmission method is not limited in embodiments of this application.

The following describes the fault information transmission method provided in embodiments of this application by using several example embodiments.

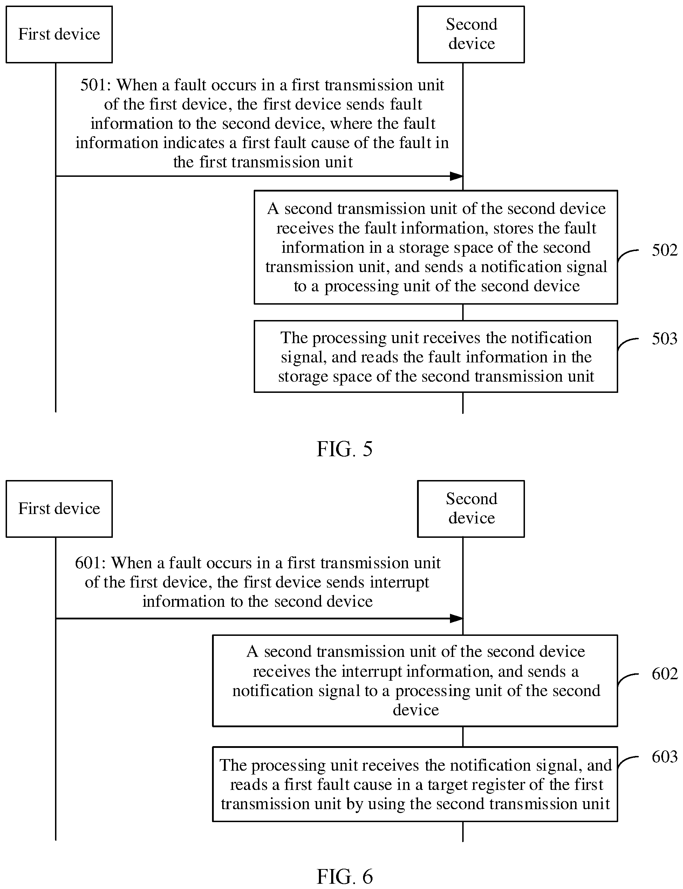

FIG. 5 is a flowchart of a fault information transmission method according to an example embodiment of this application. In this embodiment, an example in which the method is applied to the transmission system shown in any one of FIG. 2 to FIG. 4 is used for description. The method includes the following steps.

Step 501: When a fault occurs in a first transmission unit of a first device, the first device sends fault information to a second device, where the fault information indicates a first fault cause of the fault in the first transmission unit.

Optionally, the first device detects whether a fault occurs in the first transmission unit in real time or at a preset time interval. The first device sends the fault information to the second device when it is detected that the fault occurs in the first transmission unit of the first device.

The preset time interval may be a custom setting, or may be a default setting. This is not limited in embodiments of this application.

Optionally, when it is detected that the fault occurs in the first transmission unit of the first device, the first device stores the fault information in a storage space of the first transmission unit.

Optionally, within a period of time when the fault occurs in the first transmission unit of the first device, the first device sends the fault information to the second device. To be specific, the first device sends the fault information to the second device at a start moment or at a target moment after the start moment at which the fault occurs in the first transmission unit of the first device, where an absolute value of a difference between the target moment and the start moment is less than the preset time threshold.

Data transmission is performed between the first device and the second device by using respective transmission units, that is, the first transmission unit of the first device sends the fault information to the second transmission unit of the second device.

Optionally, the fault information includes a first index value, and the first index value is a number of the first fault cause of the fault in the first transmission unit, and indicates the first fault cause.

Optionally, the first transmission unit of the first device stores a preset correspondence, and the preset correspondence includes a one-to-one correspondence between a fault cause and an index value. For example, the fault cause includes at least one of a single-bit fault in the memory, a multi-bit fault in the memory, and an internal bus transmission fault. The memory is an internal memory of the first transmission unit of the first device.

For example, the preset correspondence includes the following: An index value "0x1" corresponds to the fault cause "a single-bit fault in the memory". An index value "0x2" corresponds to the fault cause "a multi-bit fault in the memory". An index value "0x3" corresponds to the fault cause "an internal bus transmission fault". An index value "0x4" corresponds to a fault cause "an unstable power supply voltage of a processing chip". An index value "0x5" corresponds to a fault cause "a link unlocked". An index value "0x6" corresponds to a fault cause "cyclic redundancy check (Cyclic Redundancy Check, CRC) error of a data packet". An index value "0x7" corresponds to a fault cause "Buffer overflow in the processing chip". This is not limited in embodiments of this application.

Optionally, that the first device sends the fault information to the second device when the fault occurs in the first transmission unit of the first device includes: When the fault occurs in the first transmission unit of the first device, the first device determines the first fault cause of the fault in the first transmission unit, the first device determines, based on the preset correspondence, the first index value corresponding to the first fault cause, and the first device sends the first index value to the second device.

In a possible implementation, when the fault occurs in the first transmission unit of the first device and a priority of the fault cause is greater than a preset priority threshold, the first device sends the fault information to the second device. To be specific, in this implementation, a priority of the first fault cause indicated by the fault information is greater than the preset priority threshold.

Optionally, when the fault occurs in the first transmission unit of the first device and the priority of the fault cause is less than or equal to the preset priority threshold, the first device does not send the fault information to the second device, and the second device reads the current fault information of the first device as described in the conventional technology.

Optionally, priorities corresponding to the plurality of fault causes are preset. In a possible setting manner, a priority of a target fault cause is set to a first priority, and a priority of another fault cause other than the target fault cause is set to a second priority, where the target fault cause includes at least one fault cause. The first priority is greater than the preset priority threshold, and the second priority is less than the preset priority threshold.

For example, the plurality of fault causes include a single-bit failure in a memory, a multi-bit failure in the memory, and an internal bus transmission failure, where the fault cause "a multi-bit failure in the memory" and the fault cause "an internal bus transmission failure" affect functions. When an error occurs, a processing unit of the second device needs to intervene, and priorities of the two fault causes may be set to the first priority, that is, a high priority. The fault cause "a single-bit fault in the memory" may be automatically corrected. When an error occurs, only a warning is required, and the processing unit of the second device does not need to intervene. A priority of the fault cause may be set to the second priority, that is, a low priority.

In another possible setting manner, a priority of a first target fault cause is set to the first priority, a priority of a second target fault cause is set to the second priority, and a priority of another fault cause other than the first target fault cause and the second target fault cause is set to a third priority. Each of the first target fault cause and the second target fault cause includes at least one fault cause. The first priority and the second priority are greater than the preset priority threshold, and the third priority is less than the preset priority threshold.

It should be noted that a manner of setting the priority of the fault cause is not limited in embodiments of this application.

Step 502: The second transmission unit of the second device receives the fault information, stores the fault information in a storage space of the second transmission unit, and sends a notification signal to the processing unit of the second device.

The second transmission unit of the second device receives the fault information sent by the first transmission unit. After receiving the fault information, the second transmission unit stores the fault information in the storage space, and the second transmission unit sends the notification signal to the processing unit. It should be noted that the step in which the second transmission unit stores the fault information in the storage space of the second transmission unit and the step in which the second transmission unit sends the notification signal to the processing unit may be performed simultaneously, or may be performed in sequence. This is not limited in embodiments of this application.

The storage space of the second transmission unit is a register. Optionally, the second transmission unit includes a plurality of registers, and the storage space used to store the fault information is a specified register in the plurality of registers.

Optionally, the fault information includes a first index value, and the first index value indicates the first fault cause of the fault in the first transmission unit. To be specific, the second transmission unit of the second device receives the first index value, and stores the first index value in the storage space of the second transmission unit.

Optionally, the second transmission unit generates a pulse signal, that is, a notification signal, on the first interface. The notification signal indicates that the fault occurs in the first transmission unit of the first device. The second transmission unit sends the notification signal to the processing unit by using the first interface. For example, the first interface is a GPIO interface.

In a possible implementation, the first device sends only the first index value to the second device, and does not send an interrupt signal, where the interrupt signal indicates that the fault occurs in the first transmission unit of the first device. To be specific, when the fault occurs in the first transmission unit of the first device, the first device sends the first index value to the second device. The second transmission unit of the second device receives the first index value, stores the first index value in the storage space of the second transmission unit, and sends the notification signal to the processing unit of the second device.

Optionally, the second transmission unit generates the notification signal based on the first index value, and sends the notification signal to the processing unit of the second device. That the second transmission unit generates the notification signal based on the first index value includes: The second transmission unit generates the notification signal when determining that the first index value is received, where the notification signal indicates the processing unit to read the first index value in the storage space of the second transmission unit.

In another possible implementation, the first device sends the interrupt signal and the first index value to the second device. To be specific, when the fault occurs in the first transmission unit of the first device, the first device sends the interrupt signal and the first index value to the second device. The second transmission unit of the second device receives the interrupt signal and the first index value, stores the first index value in a storage space of the second transmission unit, and sends a notification signal to the processing unit of the second device.

The interrupt signal and the first index value may be sent simultaneously or separately. To be specific, when the fault occurs in the first transmission unit of the first device, the first device simultaneously sends the interrupt signal and the first index value to the second device. When the fault occurs in the first transmission unit of the first device, the first device sends the first index value to the second device after sending the interrupt signal to the second device. Alternatively, when the fault occurs in the first transmission unit of the first device, the first device sends the interrupt signal to the second device after sending the first index value to the second device. This is not limited in embodiments of this application.

Optionally, the interrupt signal is a digital signal, and a representation form of the interrupt signal is at least one bit of information, where the at least one bit of information may be a default setting or a user-defined setting. For example, the interrupt signal is a customized 8-bit information "01010101". This is not limited in embodiments of this application.

Optionally, the second transmission unit generates the notification signal based on the interrupt signal and the first index value, and sends the notification signal to the processing unit of the second device. That the second transmission unit generates the notification signal based on the interrupt signal and the first index value includes: The second transmission unit generates the notification signal when determining that the interrupt signal and the first index value are received, where the notification signal indicates the processing unit to read the first index value in the storage space of the second transmission unit.

Step 503: The processing unit receives the notification signal, and reads the fault information in the storage space of the second transmission unit.

The processing unit receives the notification signal sent by the second transmission unit, and after receiving the notification signal, the processing unit reads the fault information in the storage space of the second transmission unit.

Optionally, the processing unit reads the fault information in the storage space of the second transmission unit by using a second interface. For example, the second interface is an I²C interface.

Optionally, the fault information includes a first index value, a processing unit of the second device stores a preset correspondence, and the preset correspondence includes a one-to-one correspondence between a fault cause and an index value. After reading the first index value, the processing unit of the second device determines, based on the preset correspondence, the first fault cause corresponding to the first index value. It should be noted that, for description of the index value and the fault cause, reference may be made to related descriptions in the foregoing steps. Details are not described herein again.

In conclusion, in an embodiment of this application, the first device sends, to the second device, the fault information indicating the first fault cause of the fault in the first transmission unit. After receiving the fault information, the second transmission unit of the second device stores the fault information in the local storage space, and sends the notification signal to the processing unit of the second device. The processing unit may directly obtain the fault information by reading the local storage space. This avoids low fault determining efficiency due to limitation of a transmission mechanism between devices at two ends of a transmission system in the conventional technology, greatly shortens duration in which the processing unit obtains the current first fault cause of the first transmission unit, and improves fault determining efficiency of the second device.

In an embodiment of this application, when the fault occurs in the first transmission unit of the first device, the first device sends only the first index value to the second device, and does not send an interrupt signal, where the first index value indicates the first fault cause of the fault in the first transmission unit, so that after receiving the first index value, the second transmission unit of the second device stores the first index value in the storage space of the second transmission unit, and sends the notification signal to the processing unit. This further reduces data transmission overheads between the first device and the second device while improving efficiency of obtaining the fault cause.

In an embodiment of this application, when the fault occurs in the first transmission unit of the first device, the first device sends the interrupt signal and the first index value to the second device, where the interrupt signal indicates that the fault occurs in the first transmission unit of the first device, and the first index value indicates the first fault cause of the fault in the first transmission unit, so that the second transmission unit of the second device stores the received first index value in the storage space of the second transmission unit, and the second device triggers, based on the received interrupt signal and the first index value, to perform the step of generating and sending the notification signal. This further ensures reliability of notification signal transmission.

In addition, in the conventional technology, a plurality of registers are disposed in the serializer 104 to record a plurality of fault causes. When the processing chip 124 learns that a fault occurs in the camera 100, and further reads the current fault cause by using the I²C interface, the fault cause is obtained by querying the registers one by one. As a result, a time for querying the fault cause may become long. For example, when the fault cause is recorded in a last register, the processing chip 124 needs to query the last register to obtain the current fault cause.

However, in an embodiment of this application, the target storage space is set in the first transmission unit of the first device. The target storage space is one of the plurality of storage spaces, and the target storage space is used to store the first fault cause of the fault in the first transmission unit. In this way, when the processing unit of the second device needs to read the first fault cause of the first transmission unit, the processing unit of the second device preferably reads the data in the target storage space of the first transmission unit, to shorten duration for querying the current first fault cause of the first transmission unit.

In a possible implementation, FIG. 6 is a flowchart of a fault information transmission method according to another example embodiment of this application. In this embodiment, an example in which the method is applied to the transmission system shown in any one of FIG. 2 to FIG. 4 is used for description. The method includes the following steps.

Step 601: When a fault occurs in a first transmission unit of a first device, the first device sends interrupt information to a second device.

Optionally, the interrupt information includes an interrupt signal and an identifier of a target storage space.

The interrupt signal indicates that the fault occurs in the first transmission unit of the first device. The identifier of the target storage space may be a name or an address of the target storage space. For example, the target storage space is a target register.

Optionally, the interrupt information includes an interrupt signal. The identifier of the target storage space is pre-agreed on by the first device and the second device.

Step 602: A second transmission unit of the second device receives the interrupt information, and sends a notification signal to a processing unit of the second device.

The second transmission unit of the second device receives the interrupt information, and sends the notification signal to the processing unit of the second device, where the notification signal indicates that the fault occurs in the first transmission unit of the first device.

Step 603: The processing unit receives the notification signal, and reads a first fault cause in the target register of the first transmission unit by using the second transmission unit.

The target storage space is used to store the first fault cause of the fault in the first transmission unit.

Optionally, the first fault cause is a fault cause whose priority is greater than a preset priority threshold. In this way, when the processing unit of the second device needs to read the first fault cause of the first transmission unit, the processing unit of the second device preferably reads the data in the target storage space of the first transmission unit, to shorten duration for querying the high-priority fault cause.

It should be noted that, for a manner of setting the fault cause and the priority of the fault cause, reference may be made to the related description in the foregoing embodiment by analogy. Details are not described herein again.

The following describes apparatus embodiments of this application, which may be used to perform the method embodiments of this application. For details not disclosed in the apparatus embodiments of this application, refer to the method embodiments of this application.

Refer to the first device in FIG. 2. FIG. 2 is a block diagram of a fault information transmission apparatus according to an example embodiment of this application. For the method executed by the fault information transmission apparatus, refer to the method embodiments executed by the first device in FIG. 5 and FIG. 6.

Refer to the second device in FIG. 2. FIG. 2 is a block diagram of a fault information transmission apparatus according to an example embodiment of this application. For the method executed by the fault information transmission apparatus, refer to the method embodiments executed by the second device in FIG. 5 and FIG. 6.

It should be noted that, when the apparatus provided in the foregoing embodiments implements the functions of the apparatus, division of the foregoing function modules is only used as an example for description. In actual application, the foregoing functions may be allocated to different function modules for implementation as required, that is, an inner structure of a device is divided into different function modules, to implement all or some of the functions described above. In addition, the apparatus provided in the foregoing embodiments and the method embodiments pertain to a same concept. For a specific implementation process thereof, refer to the method embodiments. Details are not described herein again.

An embodiment of this application further provides a computer program product, including computer-readable code or a non-volatile computer-readable storage medium that carries computer-readable code. When the computer-readable code runs in a processor of an electronic device, the processor in the electronic device performs the method performed by the first device or the second device in the foregoing embodiment.

An embodiment of this application further provides a transmission system. The transmission system includes a first device and a second device. The first device performs the method performed by the first device in the foregoing embodiment, and the second device performs the method performed by the second device in the foregoing embodiment.

An embodiment of this application further provides a non-volatile computer-readable storage medium. The non-volatile computer-readable storage medium stores computer program instructions. When the computer program instructions are executed by a processor, the method performed by the first device or the second device in embodiments is implemented.

The computer-readable storage medium may be a tangible device that may retain and store instructions for use by an instruction execution device. The computer-readable storage medium may be, for example, but is not limited to, an electrical storage device, a magnetic storage device, an optical storage device, an electromagnetic storage device, a semiconductor storage device, or any suitable combination thereof. More specific examples (non-exhaustive list) of the computer-readable storage medium include: a portable computer disk, a hard disk, a random access memory (Random Access Memory, RAM), a read-only memory (ReadOnly Memory, ROM), an erasable programmable read-only memory (Electrically Programmable Read-Only-Memory, EPROM or a flash memory), a static random-access memory (Static Random-Access Memory, SRAM), a portable compact disc read-only memory (Compact Disc Read-Only Memory, CD-ROM), a digital versatile disc (Digital Video Disc, DVD), a memory stick, a floppy disk, a mechanical coding device, for example, a punching card or a groove protrusion structure that stores instructions, and any suitable combination thereof.

The computer-readable program instructions or code described herein may be downloaded from a computer-readable storage medium to each computing/processing device, or downloaded to an external computer or an external storage device over a network, like the internet, a local area network, a wide area network, and/or a wireless network. The network may include copper transmission cables, optical fiber transmission, wireless transmission, routers, firewalls, switches, gateway computers, and/or edge servers. A network adapter card or a network interface in each computing/processing device receives computer-readable program instructions from a network, and forwards the computer-readable program instructions for storage in a computer-readable storage medium in each computing/processing device.

The computer program instructions used to perform operations in this application may be assembly instructions, instruction set architecture (Instruction Set Architecture, ISA) instructions, machine instructions, machine-related instructions, microcode, firmware instructions, status setting data, or source code or target code written in one or any combination of more programming languages. The programming languages include object-oriented programming languages such as Smalltalk and C++, and a conventional procedural programming language such as "C" or a similar programming language. The computer-readable program instructions may be executed entirely on a user computer, partly on the user computer, as a stand-alone software package, partly on the user computer and partly on a remote computer, or entirely on the remote computer or a server. When a remote computer is involved, the remote computer may be connected to a user computer over any type of network, including a local area network (Local Area Network, LAN) or a wide area network (Wide Area Network, WAN), or may be connected to an external computer (for example, connected by using an internet service provider over the internet). In some embodiments, an electronic circuit, for example, a programmable logic circuit, a field-programmable gate array (Field-Programmable Gate Array, FPGA), or a programmable logic array (Programmable Logic Array, PLA), is customized by using status information of computer-readable program instructions. The electronic circuit may execute the computer-readable program instructions, to implement various aspects of this application.

The various aspects of this application are described herein with reference to the flowcharts and/or the block diagrams of the method, the apparatus (system), and the computer program product according to embodiments of this application. It should be understood that each block in the flowcharts and/or the block diagrams and combinations of blocks in the flowcharts and/or the block diagrams may be implemented by computer-readable program instructions.

The computer-readable program instructions may be provided for a processor of a general-purpose computer, a dedicated computer, or another programmable data processing apparatus to produce a machine, so that the instructions, when executed by the processor of the computer or the another programmable data processing apparatus, create an apparatus for implementing functions/actions specified in one or more blocks in the flowcharts and/or block diagrams. Alternatively, the computer-readable program instructions may be stored in a computer-readable storage medium. The instructions enable a computer, a programmable data processing apparatus, and/or another device to work in a specific manner. Therefore, the computer-readable medium storing the instructions includes an artifact that includes instructions for implementing various aspects of functions/actions specified in one or more blocks in the flowcharts and/or the block diagrams.

Alternatively, the computer-readable program instructions may be loaded onto a computer, another programmable data processing apparatus, or another device, so that a series of operation steps are performed on the computer, the another programmable data processing apparatus, or the another device to produce a computer-implemented process. Therefore, the instructions executed on the computer, the another programmable data processing apparatus, or the another device implement functions/actions specified in one or more blocks in the flowcharts and/or the block diagrams.

The flowcharts and the block diagrams in the appended drawings illustrate system architectures, functions, and operations of possible implementations of apparatuses, systems, methods, and computer program products according to a plurality of embodiments of this application. In this regard, each block in the flowcharts or the block diagrams may represent a module, a program segment, or a part of the instructions, where the module, the program segment, or the part of the instructions includes one or more executable instructions for implementing a specified logical function. In some alternative implementations, the functions marked in the blocks may also occur in a sequence different from that marked in the accompanying drawings. For example, two consecutive blocks may actually be executed substantially in parallel, and sometimes may be executed in a reverse order, depending on a function involved.

It should also be noted that each block in the block diagram and/or the flowchart, and a combination of blocks in the block diagram and/or the flowchart may be implemented by hardware (for example, a circuit or an application-specific integrated circuit (Application-Specific Integrated Circuit, ASIC)) that performs a corresponding function or action, or may be implemented by a combination of hardware and software, for example, firmware.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of a plural. A single processor or another unit may implement several functions enumerated in the claims. Some measures are recorded in dependent claims that are different from each other, but this does not mean that these measures cannot be combined to produce a better effect.

## Claims

1. A fault information transmission method, applied to a transmission system comprising a first device and a second device, wherein the method comprises:
when a fault occurs in a first transmission unit of the first device, sending, by the first device, fault information to the second device, wherein the fault information indicates a first fault cause of the fault in the first transmission unit;
receiving, by a second transmission unit of the second device, the fault information, storing the fault information in a storage space of the second transmission unit, and sending a notification signal to a processing unit of the second device; and
receiving, by the processing unit, the notification signal, and reading the fault information in the storage space of the second transmission unit.

2. The method according to claim 1, wherein the fault information comprises a first index value, and the method further comprises:
determining, by the first device based on a preset correspondence, the first index value corresponding to the first fault cause, wherein the preset correspondence comprises a one-to-one correspondence between a fault cause and an index value; and
after the receiving, by the processing unit, the notification signal, and reading the fault information in the storage space of the second transmission unit, the method further comprises:
determining, by the processing unit based on the preset correspondence, the first fault cause corresponding to the first index value.

3. The method according to claim 2, wherein the fault cause comprises at least one of a single-bit fault in a memory, a multi-bit fault in the memory, and an internal bus transmission fault.

4. The method according to claim 2 or 3, wherein before the sending a notification signal to a processing unit of the second device, the method further comprises:
generating, by the second transmission unit, the notification signal based on the first index value.

5. The method according to claim 2 or 3, wherein the method further comprises:
sending, by the first device, an interrupt signal to the second device, wherein the interrupt signal indicates that the fault occurs in the first transmission unit of the first device; and
before sending, by the second transmission unit, a notification signal to a processing unit of the second device, the method further comprises:
generating, by the second transmission unit, the notification signal based on the interrupt signal and the first index value.

6. The method according to any one of claims 1 to 5, wherein a priority of the first fault cause is greater than a preset priority threshold.

7. The method according to any one of claims 1 to 6, wherein the first device is a camera, the second device is a mobile data center, the first transmission unit is a serializer, the second transmission unit is a deserializer, the storage space is a register, and the processing unit is a processing chip.

8. The method according to any one of claims 1 to 6, wherein the first device is a display, the second device is a cockpit controller, the first transmission unit is a deserializer, the second transmission unit is a serializer, the storage space is a register, and the processing unit is a processing chip.

9. A fault information transmission method, applied to a first device, wherein the method comprises:
when a fault occurs in a first transmission unit of the first device, sending fault information to a second device, wherein the fault information indicates a first fault cause of the fault in the first transmission unit.

10. The method according to claim 9, wherein the fault information comprises a first index value, and the method further comprises:
determining, based on a preset correspondence, the first index value corresponding to the first fault cause, wherein the preset correspondence comprises a one-to-one correspondence between a fault cause and an index value.

11. The method according to claim 10, wherein the fault cause comprises at least one of a single-bit fault in a memory, a multi-bit fault in the memory, and an internal bus transmission fault.

12. The method according to claim 10 or 11, wherein the method further comprises:
sending an interrupt signal to the second device, wherein the interrupt signal indicates that the fault occurs in the first transmission unit of the first device.

13. The method according to any one of claims 9 to 12, wherein a priority of the first fault cause is greater than a preset priority threshold.

14. The method according to any one of claims 9 to 13, wherein the first device is a camera, the first transmission unit is a serializer, and the second device is a mobile data center.

15. The method according to any one of claims 9 to 13, wherein the first device is a display, the first transmission unit is a deserializer, and the second device is a cockpit controller.

16. A fault information transmission method, applied to a second device, wherein the method comprises:
receiving, by a second transmission unit of the second device, fault information sent by a first device, wherein the fault information indicates a first fault cause of a fault in a first transmission unit of the first device;
storing, by the second transmission unit, the fault information in a storage space of the second transmission unit, and sending a notification signal to a processing unit of the second device; and
receiving, by the processing unit, the notification signal, and reading the fault information in the storage space of the second transmission unit.

17. The method according to claim 16, wherein the fault information comprises a first index value, and the method further comprises:
determining, by the processing unit based on a preset correspondence, the first fault cause corresponding to the first index value, wherein the preset correspondence comprises a one-to-one correspondence between a fault cause and an index value.

18. The method according to claim 17, wherein the fault cause comprises at least one of a single-bit fault in a memory, a multi-bit fault in the memory, and an internal bus transmission fault.

19. The method according to claim 17 or 18, wherein before the sending a notification signal to a processing unit of the second device, the method further comprises:
generating, by the second transmission unit, the notification signal based on the first index value.

20. The method according to claim 17 or 18, wherein before the sending a notification signal to a processing unit of the second device, the method further comprises:
generating, by the second transmission unit, the notification signal based on an interrupt signal and the first index value, wherein the interrupt signal indicates that the fault occurs in the first transmission unit of the first device.

21. The method according to any one of claims 16 to 20, wherein a priority of the first fault cause is greater than a preset priority threshold.

22. The method according to any one of claims 16 to 21, wherein the first device is a camera, the second device is a mobile data center, the first transmission unit is a serializer, the second transmission unit is a deserializer, the storage space is a register, and the processing unit is a processing chip.

23. The method according to any one of claims 16 to 21, wherein the first device is a display, the second device is a cockpit controller, the first transmission unit is a deserializer, the second transmission unit is a serializer, the storage space is a register, and the processing unit is a processing chip.

24. A fault information transmission apparatus, used in a first device, wherein the apparatus comprises:
a first transmission unit, configured to: when a fault occurs in a first transmission unit of the first device, send fault information to a second device, wherein the fault information indicates a first fault cause of the fault in the first transmission unit.

25. The apparatus according to claim 24, wherein the fault information comprises a first index value; and
the first transmission unit is further configured to determine, based on a preset correspondence, the first index value corresponding to the first fault cause, wherein the preset correspondence comprises a one-to-one correspondence between a fault cause and an index value.

26. The apparatus according to claim 25, wherein the fault cause comprises at least one of a single-bit fault in a memory, a multi-bit fault in the memory, and an internal bus transmission fault.

27. The apparatus according to claim 25 or 26, wherein the first transmission unit is further configured to send an interrupt signal to the second device, wherein the interrupt signal indicates that the fault occurs in the first transmission unit of the first device.

28. The apparatus according to any one of claims 24 to 27, wherein a priority of the first fault cause is greater than a preset priority threshold.

29. A fault information transmission apparatus, used in a second device, wherein the apparatus comprises:
a second transmission unit, configured to receive fault information sent by a first device, wherein the fault information indicates a first fault cause of a fault in a first transmission unit of the first device, wherein
the second transmission unit is further configured to: store the fault information in a storage space of the second transmission unit, and send a notification signal to a processing unit of the second device; and
the processing unit is configured to: receive the notification signal, and read the fault information in the storage space of the second transmission unit.

30. The apparatus according to claim 29, wherein the fault information comprises a first index value; and
the processing unit is further configured to determine, based on a preset correspondence, the first fault cause corresponding to the first index value, wherein the preset correspondence comprises a one-to-one correspondence between a fault cause and an index value.

31. The apparatus according to claim 30, wherein the fault cause comprises at least one of a single-bit fault in a memory, a multi-bit fault in the memory, and an internal bus transmission fault.

32. The apparatus according to claim 30 or 31, wherein
the second transmission unit is further configured to generate the notification signal based on the first index value.

33. The apparatus according to claim 30 or 31, wherein
the second transmission unit is further configured to generate the notification signal based on an interrupt signal and the first index value, wherein the interrupt signal indicates that the fault occurs in the first transmission unit of the first device.

34. The apparatus according to any one of claims 29 to 33, wherein a priority of the first fault cause is greater than a preset priority threshold.

35. A non-volatile computer-readable storage medium, storing computer program instructions, wherein when the computer program instructions are executed by a processor, the method according to any one of claims 9 to 15 is implemented, or when the computer program instructions are executed by a processor, the method according to any one of claims 16 to 23 is implemented.

36. A transmission system, wherein the transmission system comprises the fault information transmission apparatus according to any one of claims 24 to 28 and the fault information transmission apparatus according to any one of claims 29 to 34.
